# FASCICULE DE BREVET EUROPEEN

(11) **EP 3 468 857 B1**
(45) Date de publication et mention de la délivrance du brevet: **01.07.2020**
(21) Numéro de dépôt: 17725714.4
(22) Date de dépôt: 04.05.2017
(51) Int. Cl.: B62D 25/08, B60P 7/08

(54) **ENSEMBLE D'UN PANNEAU ARRIERE ET DE SA DOUBLURE AVEC UN ELEMENT DE RENFORCEMENT INTEGRE**
ANORDNUNG EINER HINTEREN TAFEL UND DEREN AUSKLEIDUNG MIT EINEM INTEGRIERTEN VERSTÄRKUNGSELEMENT
ASSEMBLY OF A REAR PANEL AND ITS LINING WITH AN INTEGRATED REINFORCEMENT ELEMENT

(30) Priorité: 13.06.2016 FR 1655417
(43) Date de publication de la demande: 17.04.2019
(73) Titulaire: PSA Automobiles SA, 78300 Poissy (FR)
(72) Inventeur: PODVIN, Christophe, 78180 Montigny Le Bretonneux (FR); TING, Andre, 92800 Puteaux (FR)
(86) Numéro de dépôt international: PCT/FR2017/051068
(87) Numéro de publication internationale: WO 2017/216435

(56) Documents cités:
- US-A1- 2014 035 320
- US-A1- 2014 054 928
- US-A1- 2015 217 809

## Description

L'invention porte sur un ensemble d'un panneau arrière et d'une doublure de panneau délimitant entre elles un corps creux avec un élément de renforcement intégré dans le corps creux. Le document US 2014/0054928 A1 est considéré comme l'état de la technique le plus proche de l'objet de la revendication 1.

Il est connu de munir un panneau arrière d'une doublure de panneau arrière, l'ensemble ainsi formé étant destiné à être disposé à l'arrière d'un véhicule automobile. Dans un tel ensemble, des portions de panneau et de doublure en vis-à-vis intercalent entre elles un corps creux. Le corps creux est renforcé par un élément de renforcement reposant sur une face interne de la portion de doublure délimitant intérieurement le corps creux en coopération avec une face interne en vis-à-vis de la portion de panneau. Cet élément de renforcement sert à augmenter la résistance en torsion de l'ensemble.

D'autre part, la portion de doublure porte un organe d'attache bagage sur une face opposée à sa face interne délimitant intérieurement le corps creux. Cette face opposée de la portion de doublure est destinée à se trouver dans l'intérieur d'un coffre arrière de véhicule automobile en formant une portion de la paroi arrière du coffre.

Selon l'état de la technique, l'organe d'attache bagage est fixé à la doublure de panneau par un élément de fixation traversant la doublure de panneau. Il est nécessaire de prévoir une pièce supplémentaire, à savoir une romaine pour rendre la fixation plus solide.

Donc selon l'état de la technique le plus proche, il est nécessaire pour un ensemble formé d'un panneau arrière et de sa doublure de prévoir, d'une part, un élément de renforcement de l'ensemble et, d'autre part, une pièce supplémentaire pour la fixation de l'organe d'attache bagage sur la doublure.

Le document FR-A-2 983 801 décrit un dispositif d'attache de bagage pour véhicule comportant une base destinée à être fixée de manière solidaire au véhicule et une boucle montée en rotation autour d'un axe par rapport à la base. La boucle est constituée d'une partie de liaison montée dans la base et d'une partie libre, la base comportant une bande métallique déformée de manière à former une chape dans laquelle est logée la partie de liaison de la boucle.

Dans ce document, la partie de liaison de la boucle comporte des moyens de blocage qui sont agencés pour coopérer avec des moyens de retenue de la bande métallique de la base de manière à définir au moins une position angulaire stable de la boucle.

Si ce document est relatif à un organe d'attache bagage dans un coffre arrière de véhicule automobile, il ne décrit pas un ensemble formé d'un panneau et d'une doublure qui doit être renforcé en torsion.

Il s'ensuit de l'étude de l'état de la technique qu'il est connu, pour améliorer la torsion de caisse, de renforcer le corps creux par un élément de renforcement. D'autre part, il est connu pour fixer l'anneau d'attache bagage contre la doublure de panneau arrière de renforcer l'épaisseur locale par une pièce telle qu'une romaine afin de résister aux efforts appliqués sur l'anneau d'attache bagages. Par contre ces deux problèmes n'ont jamais été abordés ensemble et ont toujours donné lieu à deux solutions séparées qui induisent un surplus d'éléments.

Par conséquent, le problème à la base de l'invention est de concevoir un ensemble d'un panneau arrière et d'une doublure de panneau intercalant entre elles un corps creux avec un renforcement de cet ensemble en torsion et une fixation de manière résistante d'un organe d'attache bagage sur la doublure de panneau qui soient les plus simples possibles.

Pour atteindre cet objectif, il est prévu selon l'invention un ensemble d'un panneau arrière destiné à être disposé à l'arrière d'un véhicule automobile et de sa doublure de panneau arrière, des portions de panneau et de doublure en vis-à-vis intercalant entre elles un corps creux, le corps creux étant renforcé par un élément de renforcement reposant sur une face interne de la portion de doublure délimitant intérieurement le corps creux en coopération avec une face interne en vis-à-vis de la portion de panneau, la portion de doublure portant un organe d'attache bagage sur une face opposée à sa face interne délimitant intérieurement le corps creux, caractérisé en ce que l'élément de renforcement, d'une part, rejoint la face interne du panneau sur au moins une partie d'un contour du corps creux en étant solidarisé avec le panneau et, d'autre part, est solidarisé avec la portion de doublure et l'organe par un élément de fixation traversant la portion de doublure.

L'effet technique est de conférer à l'élément de renforcement deux fonctions qui étaient précédemment dans l'état de la technique traitées séparément l'une de l'autre. L'élément de renforcement selon l'invention sert au renforcement du corps creux et à augmenter la résistance à la torsion de l'ensemble. De plus, ce qui n'était pas connu de l'état de la technique, l'élément de renforcement sert aussi à renforcer la fixation de l'organe d'attache bagage en évitant l'utilisation d'une pièce supplémentaire comme une romaine.

Il est ainsi garanti un maintien ferme de l'organe d'attache bagage ainsi qu'une résistance à la torsion, ceci par une seule et unique pièce qu'est l'élément de renforcement. Ceci entraîne une simplification de la logistique avec une seule pièce qu'est l'élément de renforcement au lieu d'utiliser séparément un élément de renforcement et un élément auxiliaire de fixation de l'organe d'attache bagage. Ceci se concrétise aussi par une simplification du procédé d'assemblage et de ferrage.

Avantageusement, sur le contour du corps creux, la face interne de la doublure est appliquée contre la face interne du panneau, l'élément de renforcement présentant au moins une languette solidarisée sur au moins une face interne de la doublure et/ou du panneau.

Avantageusement, l'élément de renforcement comprend au moins trois languettes.

Avantageusement, au moins une des languettes est collée ou soudée au panneau.

Avantageusement, l'élément de renforcement présente une section en U prise selon une longueur de l'ensemble avec une base du U appliquée contre la doublure et des branches du U pointant vers le panneau, une extrémité libre de chaque branche du U étant recourbée en formant une languette.

Avantageusement, le panneau et la doublure présentent un bord commun formé d'un méplat comprenant deux portions d'extrémité du panneau et de la doublure superposées, au moins une languette portée à l'extrémité d'une aile de l'élément de renforcement étant intercalée entre les deux portions d'extrémité superposées.

Avantageusement, l'élément de fixation traversant la portion de doublure est du type vis, goujon, boulon ou rivet, une extrémité de l'élément de fixation étant solidarisée à l'organe.

Avantageusement, l'organe présente un support appliqué contre la face opposée à la face interne de la portion de doublure, un anneau étant monté pivotant autour du support, le support étant solidarisé à l'extrémité de l'élément de fixation.

Avantageusement, l'ensemble comprend un insert d'espacement entre le panneau et la doublure dans des portions du panneau et de la doublure autres que celles portant le corps creux.

La présente invention concerne une partie arrière d'une caisse d'un véhicule automobile, caractérisée en ce qu'elle comprend un tel ensemble, la doublure de panneau arrière de l'ensemble étant orientée vers l'intérieur du véhicule dans un coffre arrière du véhicule.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective d'un ensemble contenant un panneau arrière associé avec une doublure de panneau en laissant entre eux un corps creux renforcé par un élément de renforcement servant aussi à renforcer la fixation d'un organe d'attache bagage, cet ensemble étant tronqué transversalement au niveau de l'élément de renforcement pour laisser apparaître cet élément, l'ensemble étant conforme à la présente invention,
- la figure 2 est une représentation schématique d'une vue en perspective de l'ensemble de la figure 1 sous un autre angle de vue, cet ensemble n'étant pas tronqué à cette figure,
- la figure 3 est une représentation schématique d'une coupe longitudinale d'un ensemble contenant un panneau arrière associé avec une doublure de panneau en laissant entre eux un corps creux comprenant un élément de renforcement servant aussi à rigidifier la fixation d'un organe d'attache bagage, cet ensemble étant conforme à la présente invention,
- la figure 4 est une représentation schématique d'une coupe latérale de l'ensemble similaire à celui montré aux figures 1 et 3.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

En se référant à toutes les figures, la présente invention concerne un ensemble d'un panneau 1 arrière destiné à être disposé à l'arrière d'un véhicule automobile et de sa doublure 2 de panneau arrière. C'est la doublure 2 de panneau arrière qui est destinée à former la paroi arrière interne d'un coffre arrière du véhicule automobile.

Dans ce qui va suivre, le panneau arrière et la doublure 2 de panneau arrière vont être dénommés simplement panneau 1 et doublure 2, ce qui ne crée pas d'ambiguïté étant donné qu'aucun autre élément de l'ensemble n'est dénommé panneau ou doublure.

Le panneau 1 et la doublure 2 laissent localement un corps creux 3 intégré entre eux, c'est-à-dire entre une portion de panneau 1 et une portion de doublure 2. Ce corps creux 3 est renforcé par un élément de renforcement 4, avantageusement sous forme d'une cloison, reposant sur une face interne de la portion de doublure 2. Cette face interne de la portion de doublure 2 délimite intérieurement le corps creux 3 en coopération avec une face interne en vis-à-vis de la portion de panneau 1.

La portion de doublure 2 porte un organe 5 d'attache bagage sur une face opposée à sa face interne délimitant intérieurement le corps creux 3. C'est cette face opposée à la face interne de la doublure 2 délimitant intérieurement le corps creux 3 qui est destinée à faire partie d'une paroi interne arrière du coffre du véhicule automobile.

Selon la présente invention, l'élément de renforcement 4, d'une part, rejoint la face interne du panneau 1 sur au moins une partie d'un contour du corps creux 3 en étant solidarisé avec le panneau 1 et, d'autre part, est solidarisé avec la portion de doublure 2 et l'organe 5 par un élément de fixation 8 traversant la portion de doublure 2.

L'élément de renforcement 4, avantageusement sous la forme d'une cloison, remplit alors deux fonctions. Il aide au renforcement du corps creux 3 et à une fixation efficace de l'organe 5 d'attache bagage sur la doublure 2. Il n'y a plus besoin d'ajouter une pièce auxiliaire comme une romaine pour la fixation de l'organe 5 d'attache bagage.

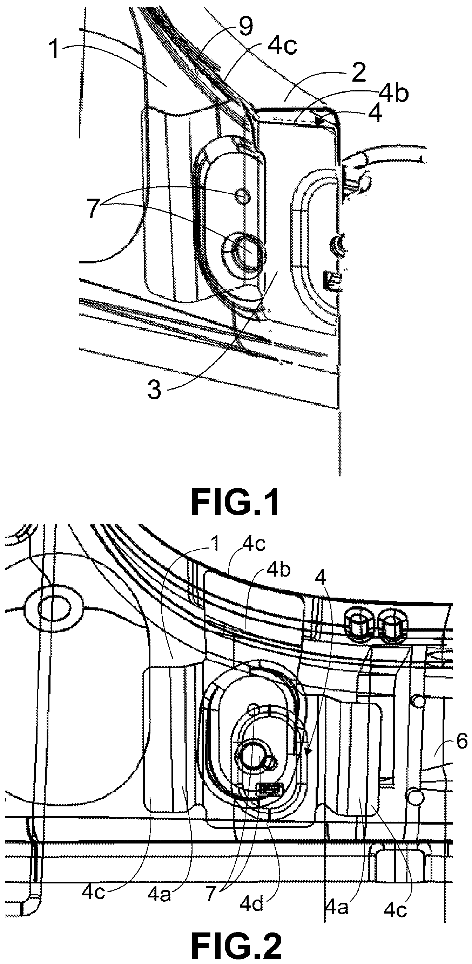

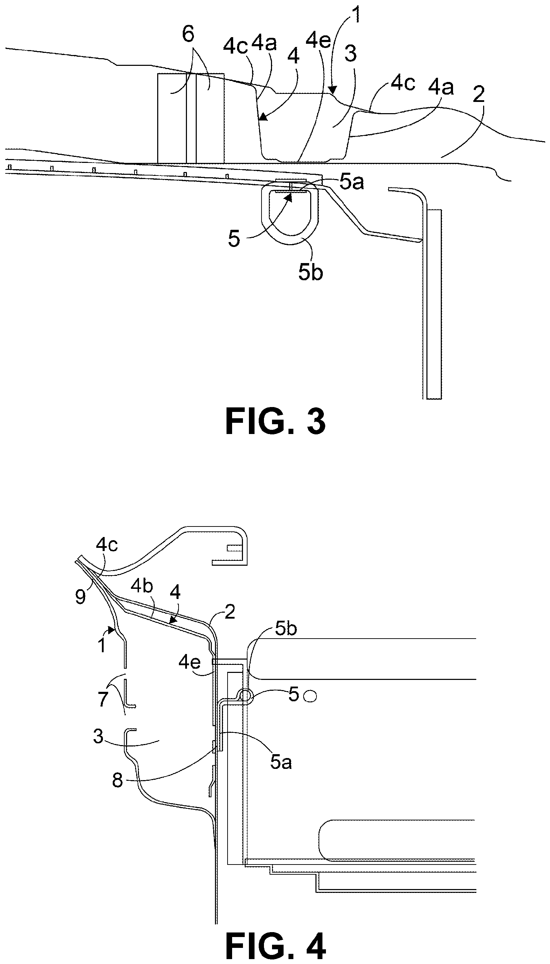

Comme il peut être vu aux figures, notamment aux figures 2 et 3, sur des parties du contour du corps creux 3, donc pour fermer ce corps creux 3, la face interne de la doublure 2 est appliquée contre la face interne du panneau 1. Ceci est illustré par exemple par un méplat 9 comprenant deux parties de tôle formant respectivement la doublure 2 et le panneau 1, les deux parties de tôle étant superposées l'une à l'autre.

La portion de panneau 1 en vis-à-vis de la portion de doublure 2 et de l'élément de renforcement 4 dans le corps creux peut comprendre des ouvertures 7 la traversant en débouchant dans le corps creux 3. Ces ouvertures 7 n'ont aucun rôle dans la présente invention.

L'élément de renforcement 4 peut présenter au moins une languette 4c solidarisée sur au moins une face interne de la doublure 2 et/ou du panneau 1.

Avantageusement, l'élément de renforcement 4 peut comprendre au moins trois languettes 4c. Ceci est montré notamment à la figure 2. Les languettes 4c sont avantageusement des portions d'extrémité de partie de l'élément de renfort pointant en direction du panneau 1.

L'élément de renforcement 4 peut être équipé d'une quatrième languette 4d mais cette quatrième languette 4d n'est pas forcément solidarisée sur une face interne notamment la face interne de la doublure 2 dont elle est très proche. Au moins une des languettes 4c peut être collée ou soudée au panneau 1.

La figure 4 montre une coupe transversale de l'ensemble tandis que la figure 3 montre une coupe longitudinale de l'ensemble formé du panneau 1 et de la doublure 2 avec l'élément de renforcement 4 intercalé entre le panneau 1 et la doublure 2.

Comme il peut être vu notamment à la figure 3, l'élément de renforcement 4 peut présenter une section en U évasé prise selon une longueur de l'ensemble avec une base 4e du U appliquée contre la doublure 2 et des branches 4a du U pointant vers le panneau 1. Les branches 4a du U peuvent présenter des bords d'extrémité recourbés qui forment chacun une languette 4c.

Les bords d'extrémité recourbés des branches 4a du U formé par l'élément de renforcement 4 sont solidarisés à la face interne du panneau 1 en regard de la doublure 2, avantageusement par collage ou soudage.

Ces bords d'extrémité recourbés des branches 4 forment des languettes 4c. A cette figure 3, il est visible un insert d'espacement 6 entre le panneau 1 et la doublure 2. Cet insert d'espacement 6 est localisé entre des portions du panneau 1 et de la doublure 2 autres que celles portant le corps creux 3 donc décalés dans la longueur de l'ensemble.

Comme il est notamment visible à la figure 4, la doublure 2 se raccorde dans la longueur avec le panneau 1. Le panneau 1 et la doublure 2 présentent alors un bord commun longitudinal à l'ensemble. Ce bord commun peut être formé d'un méplat 9 comprenant deux portions d'extrémité du panneau 1 et de la doublure 2 superposées.

L'élément de renforcement 4 comprend une aile 4b pointant vers le panneau 1 en suivant une paroi du corps creux 3 formée par la portion de la doublure 2 se raccordant au panneau 1. L'aile 4b de l'élément de renforcement 4 peut porter à une extrémité libre et distale au moins une languette 4c qui peut être intercalée entre les deux portions d'extrémité superposées du panneau 1 et de la doublure 2. Ceci peut aussi être vu à la figure 1.

L'élément de fixation 8 traversant la portion de doublure 2 peut être du type vis, goujon, boulon ou rivet, une extrémité de l'élément de fixation 8 étant solidarisée à l'organe 5. L'organe 5 présente un support 5a appliqué contre la face opposée à la face interne de la portion de doublure 2.

Pour l'attache d'un bagage dans le coffre, l'organe 5 peut présenter un anneau 5b monté pivotant autour du support 5a, le support 5a étant solidarisé à l'extrémité de l'élément de fixation 8.

La présente invention concerne aussi une partie arrière d'une caisse d'un véhicule automobile, caractérisée en ce qu'elle comprend un ensemble tel que décrit précédemment. La doublure 2 de panneau arrière de l'ensemble est orientée vers l'intérieur du véhicule dans un coffre arrière du véhicule.

L'organe 5 d'attache bagage peut faire saillie dans le coffre. Le fait que l'anneau 5b soit pivotant permet l'escamotage de l'anneau 5b quand non en service pour l'attache d'un bagage.

L'invention n'est nullement limitée aux modes de réalisation décrits et illustrés qui n'ont été donnés qu'à titre d'exemples.

## Revendications

1. Ensemble d'un panneau (1) arrière destiné à être disposé à l'arrière d'un véhicule automobile et de sa doublure (2) de panneau (1) arrière, des portions de panneau (1) et de doublure (2) en vis-à-vis intercalant entre elles un corps creux (3), le corps creux (3) étant renforcé par un élément de renforcement (4) reposant sur une face interne de la portion de doublure (2) délimitant intérieurement le corps creux (3) en coopération avec une face interne en vis-à-vis de la portion de panneau (1), **caractérisé en ce que** la portion de doublure (2) porte un organe (5) d'attache bagage sur une face opposée à sa face interne délimitant intérieurement le corps creux (3), et **en ce que** l'élément de renforcement (4), d'une part, rejoint la face interne du panneau (1) sur au moins une partie d'un contour du corps creux (3) en étant solidarisé avec le panneau (1) et, d'autre part, est solidarisé avec la portion de doublure (2) et l'organe (5) par un élément de fixation (8) traversant la portion de doublure (2).

2. Ensemble selon la revendication 1, dans lequel sur le contour du corps creux (3), la face interne de la doublure (2) est appliquée contre la face interne du panneau (1), l'élément de renforcement (4) étant sous la forme d'une cloison présentant au moins une languette (4c) solidarisée sur au moins une face interne de la doublure (2) et/ou du panneau (1).

3. Ensemble selon la revendication 2, dans lequel l'élément de renforcement (4) comprend au moins trois languettes (4c).

4. Ensemble selon l'une quelconque des revendications 2 ou 3, dans lequel au moins une des languettes (4c) est collée ou soudée au panneau (1).

5. Ensemble selon l'une quelconque des revendications 2 à 4, dans lequel l'élément de renforcement (4) présente une section en U prise selon une longueur de l'ensemble avec une base (4e) du U appliquée contre la doublure (2) et des branches (4a) du U pointant vers le panneau (1), une extrémité libre de chaque branche du U étant recourbée en formant une languette (4c).

6. Ensemble selon l'une quelconque des revendications 2 à 5, dans lequel le panneau (1) et la doublure (2) présentent un bord commun formé d'un méplat (9) comprenant deux portions d'extrémité du panneau (1) et de la doublure (2) superposées, au moins une languette (4c) portée à l'extrémité d'une aile (4b) de l'élément de renforcement (4) étant intercalée entre les deux portions d'extrémité superposées.

7. Ensemble selon l'une quelconque des revendications précédentes, dans lequel l'élément de fixation (8) traversant la portion de doublure (2) est du type vis, goujon, boulon ou rivet, une extrémité de l'élément de fixation (8) étant solidarisée à l'organe (5).

8. Ensemble selon la revendication précédente, dans lequel l'organe (5) présente un support (5a) appliqué contre la face opposée à la face interne de la portion de doublure (2), un anneau (5b) étant monté pivotant autour du support (5a), le support (5a) étant solidarisé à l'extrémité de l'élément de fixation (8).

9. Ensemble selon l'une quelconque des revendications précédentes, lequel comprend un insert d'espacement (6) entre le panneau (1) et la doublure (2) dans des portions du panneau (1) et de la doublure (2) autres que celles portant le corps creux (3).

10. Partie arrière d'une caisse d'un véhicule automobile, **caractérisée en ce qu'**elle comprend un ensemble selon l'une quelconque des revendications précédentes, la doublure (2) de panneau (1) arrière de l'ensemble étant orientée vers l'intérieur du véhicule dans un coffre arrière du véhicule.

## Patentansprüche

1. Baugruppe aus einer Rückwand (5b), die dazu bestimmt ist, am Heck eines Kraftfahrzeugs angeordnet zu werden, und aus der Verkleidung (2) der Rückwand (5b), wobei zwischen den Verkleidungsteilen der Platte (1) und der Verkleidung (2) ein Hohlkörper (3) eingefügt ist, wobei der Hohlkörper (3) durch ein Verstärkungselement (4) verstärkt ist, das auf einer Innenfläche des Verkleidungsteils (2) ruht, die den Hohlkörper (3) im Zusammenwirken mit einer gegenüberliegenden Innenfläche des Plattenteils (1) innen begrenzt, der Verkleidungsteil (2), der ein Gepäckbefestigungselement (5) auf einer seiner Innenfläche gegenüberliegenden Seite trägt, die innen den Hohlkörper (3) begrenzt, **dadurch gekennzeichnet, dass** das Verstärkungselement (4) einerseits verbindet die Innenfläche der Platte (1) über mindestens einen Teil eines Umrisses des Hohlkörpers (3), indem es an der Platte (1) befestigt ist, und ist andererseits an dem Verkleidungsteil (2) und dem Element (5) durch ein Befestigungselement (8) befestigt, das durch das Verkleidungsteil (2) hindurchgeht.

2. Zusammenbau nach Anspruch 1, bei dem an der Kontur des Hohlkörpers (3) die Innenfläche des Verkleidungsteils (2) gegen die Innenfläche der Platte (1) angelegt wird, wobei das Verstärkungselement (4) die Form einer Trennwand mit mindestens einer Zunge (4c) hat, die an mindestens einer Innenfläche des Verkleidungsteils (2) und/oder der Platte (1) befestigt ist.

3. Anordnung nach Anspruch 2, wobei das Verstärkungselement (4) mindestens drei Zungen (4c) aufweist.

4. Eine Baugruppe nach einem der Ansprüche 2 oder 3, bei der mindestens eine der Zungen (4c) mit der Platte (1) verklebt oder verschweißt ist.

5. Baugruppe nach einem der Ansprüche 2 bis 4, bei der das Verstärkungselement (4) einen U-förmigen Querschnitt über eine Länge der Baugruppe aufweist, wobei eine Basis (4e) des U gegen die Verkleidung (2) angelegt ist und die Schenkel (4a) des U zur Platte (1) zeigen, wobei ein freies Ende jedes Schenkels des U gebogen ist, um eine Zunge (4c) zu bilden.

6. Anordnung nach einem der Ansprüche 2 bis 5, bei der die Platte (1) und die Auskleidung (2) einen gemeinsamen Rand aufweisen, der durch eine Abflachung (9) gebildet wird, die zwei übereinanderliegende Endabschnitte der Platte (1) und der Auskleidung (2) umfasst, wobei mindestens eine Zunge (4c), die am Ende eines Flügels (4b) des Verstärkungselements (4) getragen wird, zwischen den beiden übereinanderliegenden Endabschnitten angeordnet ist.

7. Eine Baugruppe nach einem der vorstehenden Ansprüche, bei der das Befestigungselement (8), das durch den Auskleidungsteil (2) hindurchgeht, vom Schrauben-, Bolzen-, Bolzen- oder Niettyp ist, wobei ein Ende des Befestigungselements (8) an dem Glied (5) befestigt ist.

8. Zusammenbau nach dem vorstehenden Anspruch, bei dem das Glied (5) eine Stütze (5a) aufweist, die gegen die der Innenfläche des Verkleidungsteils (2) gegenüberliegende Fläche angelegt ist, wobei ein Ring (5b) schwenkbar um die Stütze (5a) montiert ist, wobei die Stütze (5a) am Ende des Befestigungselements (8) befestigt ist.

9. Eine Baugruppe nach einem der vorstehenden Ansprüche, die einen Abstandshaltereinsatz (6) zwischen der Platte (1) und der Auskleidung (2) in anderen Teilen der Platte (1) und der Auskleidung (2) als denen, die den Hohlkörper (3) tragen, umfaßt.

10. Hinterer Teil einer Kraftfahrzeugkarosserie, **dadurch gekennzeichnet, dass** er eine Baugruppe nach einem der vorstehenden Ansprüche umfasst, wobei die Verkleidung (2) der Rückwand (5b) der Baugruppe zum Innenraum des Fahrzeugs in einem hinteren Kofferraum des Fahrzeugs hin ausgerichtet ist.

## Claims

1. Assembly of a rear panel (5b) intended to be disposed at the rear of a motor vehicle and of its rear panel (5b) lining (2), facing portions of panel (1) and lining (2) interposing between them a hollow body (3), the hollow body (3) being reinforced by a reinforcing element (4) resting on an inner face of the lining portion (2) internally delimiting the hollow body (3) in cooperation with a facing inner face of the panel portion (1), the lining portion (2) carrying a luggage attachment member (5) on a face opposite to its inner face delimiting internally the hollow body (3), **characterised in that** the reinforcing element (4), on the one hand, joins the inner face of the panel (1) over at least part of an outline of the hollow body (3) by being secured to the panel (1) and, on the other hand, is secured to the lining portion (2) and the member (5) by a fixing element (8) passing through the lining portion (2).

2. Assembly according to claim 1, in which on the contour of the hollow body (3), the inner face of the lining portion (2) is applied against the inner face of the panel (1), the reinforcing element (4) being in the form of a partition having at least one tongue (4c) secured to at least one inner face of the lining portion (2) and/or of the panel (1).

3. An assembly according to claim 2, wherein the reinforcing element (4) comprises at least three tongues (4c).

4. An assembly according to any one of claims 2 or 3, wherein at least one of the tongues (4c) is glued or welded to the panel (1).

5. An assembly according to any one of claims 2 to 4, wherein the reinforcing member (4) has a U-shaped section taken along a length of the assembly with a base (4e) of the U applied against the lining (2) and legs (4a) of the U pointing towards the panel (1), a free end of each leg of the U being bent to form a tongue (4c).

6. An assembly according to any one of claims 2 to 5, in which the panel (1) and the liner (2) have a common edge formed by a flat (9) comprising two superposed end portions of the panel (1) and the lining (2), at least one tongue (4c) carried at the end of a wing (4b) of the reinforcing element (4) being interposed between the two superposed end portions.

7. An assembly according to any one of the preceding claims, in which the fastening element (8) passing through the lining portion (2) is of the screw, stud, bolt or rivet type, one end of the fastening element (8) being secured to the member (5).

8. Assembly according to the preceding claim, in which the member (5) has a support (5a) applied against the face opposite to the inner face of the lining portion (2), a ring (5b) being mounted so as to pivot about the support (5a), the support (5a) being secured to the end of the fastening element (8).

9. An assembly according to any one of the preceding claims, which comprises a spacer insert (6) between the panel (1) and the lining (2) in portions of the panel (1) and the lining (2) other than those carrying the hollow body (3).

10. Rear part of a motor vehicle body, **characterised in that** it comprises an assembly according to any one of the preceding claims, the lining (2) of the rear panel (5b) of the assembly being oriented towards the interior of the vehicle in a rear boot of the vehicle.
